# EUROPÄISCHE PATENTANMELDUNG

(11) **EP 0 711 982 A2**
(43) Veröffentlichungstag der Anmeldung: **15.05.1996**
(21) Anmeldenummer: 95116623.0
(22) Anmeldetag: 21.10.1995
(51) Int. Cl.: G01F 11/02

(54) **Dosier-Gerät für viskose Materialien**

(30) Priorität: 11.11.1994 DE 4440243
(71) Anmelder: Ludwig Schwerdtel GmbH., D-85757 Karlsfeld (DE)
(72) Erfinder: Hammerl, Norbert, D-85238 Petershausen (DE); Fleischer, Horst, D-85221 Dachau (DE)
(74) Vertreter: Rau, Manfred, Dr. Dipl.-Ing.

(57) **Zusammenfassung**

Ein Dosier-Gerät für viskose Materialien weist einen Dosier-Zylinder (5) mit einem Einlaß (8) und einem Auslaß (11) auf. Im Dosier-Zylinder (5) ist ein Auspreß-Kolben (6) angeordnet, der über eine Betätigungsstange (19) betätigbar ist. Diese ist mittels eines Elektro-Motors (14) antreibbar, der über einen Kurbeltrieb (18) mit der Betätigungsstange (19) verbunden ist.

## Beschreibung

Die Erfindung betrifft ein Dosier-Gerät für hochviskose Materialien.

Es sind derartige Dosier-Geräte bekannt, die einen Dosier-Zylinder mit einem Einlaß und einem Auslaß aufweisen. Der Einlaß ist durch ein Einlaß-Ventil verschließbar, während der Auslaß durch ein Auslaß-Ventil verschließbar ist. Im Dosier-Zylinder ist ein Auspreß-Kolben schwimmend angeordnet, der mittels der Kolbenstange eines pneumatisch oder hydraulisch beaufschlagbaren Kolben-Zylinder-Antriebs in Auspreß-Richtung beaufschlagbar ist. Derartige Dosier-Antriebe sind aufgrund ihrer Trägheit bei hohen Dosier-Takt-Folgen, von beispielsweise mindestens 35 Dosiervorgängen pro Minute, nicht einsetzbar. Es kommt hinzu, daß die pneumatischen oder hydraulischen Antriebe am Anfang und am Ende eines Auspreß-Hubes hohe Beschleunigungen aufweisen, da sie in extrem kurzer Zeit auf die volle Auspreßgeschwindigkeit beschleunigen und in extrem kurzer Zeit aus dieser Auspreßgeschwindigkeit in den Stillstand abbremsen. Dies führt dazu, daß in den den Dosier-Geräten nachgeschalteten Abfüll-Anlagen Druckstöße auftreten, die in die zu befüllenden Kartuschen übertragen werden.

Der Erfindung liegt die Aufgabe zugrunde, ein Dosier-Gerät zu schaffen, das eine hohe Dosierleistung ermöglicht, ohne daß Druckstöße auftreten.

Diese Aufgabe wird durch die Merkmale des Anspruches 1 gelöst. Ein Elektro-Motor mit Kurbelantrieb führt pro Umdrehung des Kurbel-Antriebs einen Dosiervorgang durch. Die Leistung kann weit höher sein, als dies mit pneumatisch oder hydraulisch beaufschlagbaren Kolben-Zylinder-Antrieben möglich ist. Es wird ein außerordentlich ruhiger Lauf erreicht, da der Bewegungsablauf der Betätigungsstange sinusförmig ist, d.h. es erfolgt am Anfang des Auspreßvorganges eine sanfte Beschleunigung und am Ende eine sanfte Abbremsung, so daß auch bei hohen Dosier-Takt-Folgen keine nachteiligen Druckstöße in die Abfüllmaschinen bzw. -anlagen gelangen.

Die Ansprüche 2 bis 4 geben besonders vorteilhafte Steuerungsmöglichkeiten wieder. Durch die Maßnahmen nach Anspruch 5 wird erreicht, daß am Ende eines Auspreßvorgangs und vor dem Öffnen des Einlaß-Ventils der Auspreß-Kolben außer Eingriff mit der Betätigungsstange kommt und daß das Füllen des Dosier-Zylinders nicht durch den Dosier-Antrieb behindert werden kann. Anspruch 7 gibt eine Möglichkeit zur Feineinstellung des Füll-Volumens des Dosier-Zylinders an. Die Ansprüche 9 und 10 geben an, wie eine wesentliche Änderung des Füll-Volumens des Dosier-Zylinders vorzunehmen ist.

Weitere Merkmale, Vorteile und Einzelheiten der Erfindung ergeben sich auch der nachfolgenden Beschreibung eines Ausführungsbeispiels anhand der Zeichnung. Es zeigen
- Fig. 1: einen vertikalen Längsschnitt durch ein Dosier-Gerät und
- Fig. 2: eine Teil-Seiten-Darstellung des Dosier-Gerätes entsprechend dem Sichtpfeil II in Fig. 1.

Das in der Zeichnung dargestellte Dosier-Gerät weist ein Gestell 1 auf, das beispielsweise auf einem Maschinengestell 2 angebracht ist. Das Dosier-Gerät weist eine Dosier-Einrichtung 3 auf, die von einem Dosier-Antrieb 4 betätigt wird.

Die Dosier-Einrichtung 3 weist einen Dosier-Zylinder 5 auf, in dem ein Auspreß-Kolben 6 in Richtung einer vertikalen Mittel-Längs-Achse 7 verschiebbar und gegenüber dem Zylinder 5 abgedichtet angeordnet ist. Der Dosier-Zylinder 5 ist mit einem Einlaß 8 an eine nicht dargestellte Einrichtung angeschlossen, durch die pastöses Material, beispielsweise Dichtungsmasse, unter Druck zugeführt wird. Derartige Vorrichtungen sind beispielsweise aus dem deutschen Patent 20 28 962 bzw. dem US-Patent 3 738 400 bekannt, worauf verwiesen werden darf. Das pastöse Material steht ständig unter Druck am Einlaß 8 an. Der Einlaß 8 ist mittels eines Einlaß-Ventils 9 verschließbar, das von einem Einlaß-Ventil-Antrieb 10 geöffnet oder geschlossen werden kann. Aus dem Dosier-Zylinder 5 mündet ein Auslaß 11 aus, der mittels eines Auslaß-Ventils 12 geöffnet und geschlossen werden kann, das mittels eines Auslaß-Ventil-Antriebs 13 betätigbar ist. An den Auslaß 11 ist eine Kartuschen-Füll- und Verschließ-Maschine anschließbar, wie sie aus der EP 0 290 747 B1 (entsprechend US-PS 4 874 022) bekannt ist und worauf verwiesen werden darf.

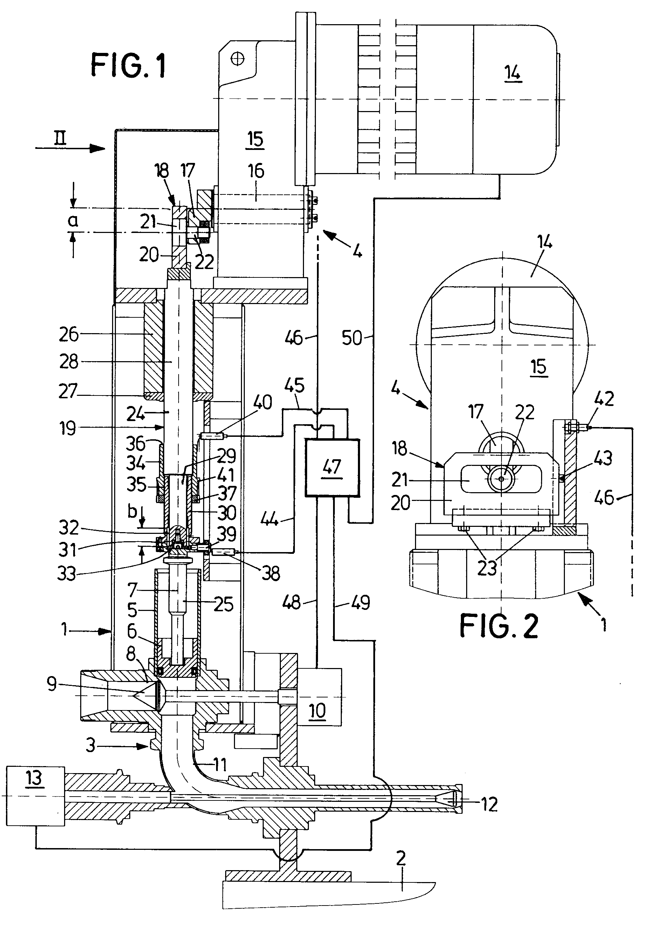

Der Dosier-Antrieb 4 weist einen Elektro-Motor 14 auf, bei dem es sich um einen polumschaltbaren Bremsmotor mit hohem Anfahrmoment handelt. Dieser Motor 14 ist mit einem Untersetzungs-Getriebe 15 versehen, an dessen Abtriebswelle 16 die Kurbel 17 eines Kurbeltriebs 18 drehfest angebracht ist. Der Kurbeltrieb 18 ist mit einer mit der Achse 7 fluchtenden Betätigungsstange 19 gekoppelt. Hierzu ist an dem dem Antrieb 4 benachbarten Ende der Betätigungsstange 19 eine Kulisse 20 mit einer quer zur Achse 7 verlaufenden Ausnehmung 21 versehen, in die ein an der Kurbel 17 angebrachter Kurbelzapfen 22 eingreift. Der Kurbelzapfen 22 ist in dieser langlochartigen Ausnehmung 21 in Richtung der Achse 7 spielfrei angeordnet, also nur quer zur Achse 7 verschiebbar. Die Exzentrizität a des Kurbelzapfens 22 gegenüber der Abtriebswelle 16 ist durch den Mittenabstand von Kurbelzapfen 22 und Abtriebswelle 16 definiert. Der Hub der Betätigungsstange 19 beträgt also 2a. Wie insbesondere Fig. 2 erkennen läßt, ist die Kulisse 20 mittels Schrauben 23 an das zugeordnete Ende der Betätigungsstange 19 angeschraubt.

Die Betätigungsstange 19 besteht aus zwei Stangenteilen, nämlich einem ersten Stangenteil 24, das dem Dosier-Antrieb 4 zugeordnet ist, und einem zweiten Stangenteil 25, das dem Dosier-Zylinder 5 zugeordnet ist. Das erste Stangenteil 24 ist in einem am Gestell 1 angebrachten Schiebelager 26 in Richtung der Achse 7 verschiebbar gelagert. Am unteren, dem zweiten Stangenteil 25 zugewandten Ende ist das Schiebelager 26 mit einem Anschlag 27 versehen. Das erste Stangenteil 24 weist einen dickeren Abschnitt 28 auf, der im Schiebelager 26 gelagert ist, und einen dünneren Abschnitt 29 auf, der dem Dosier-Zylinder 5 zugewandt ist.

Das zweite Stangenteil 25 liegt mit seinem einen Ende frei gegen den Auspreß-Kolben 6 an, d.h. der Kolben 6 ist im Dosier-Zylinder 5 schwimmend gelagert. Das zweite Stangenteil 25 und der Auspreß-Kolben 6 sind nicht fest miteinander verbunden. Am anderen, oberen Ende des zweiten Stangenteils 25 ist ein Rohrabschnitt 30 lösbar mittels Schrauben 31 angebracht, der den dünneren Abschnitt 29 des ersten Stangenteils 24 aufnimmt und umschließt. Dieser Rohrabschnitt 30 weist eine Hinterschneidung 32 auf, in der ein Mitnehmer 33 angeordnet ist, der am freien Ende des dünneren Abschnitts 29 des ersten Stangenteils 24 angebracht ist. Durch die lichte Länge b der Hinterschneidung 32 ist der Leerhub definiert, den das erste Stangenteil 24 gegenüber dem zweiten Stangenteil 25 ausüben kann. Auf dem Rohrabschnitt 30 ist benachbart zum dickeren Abschnitt 28 des zweiten Stangenteils 25 eine Schalt-Hülse 34 angebracht, die dem dickeren Abschnitt 28 des ersten Stangenteils 24 umgreift. Diese Schalt-Hülse 34 ist auf dem Rohrabschnitt 30 mittels eines Gewindes 35 angebracht, so daß die Lage des dem Schiebelager 26 zugewandten Randes 36 der Schalt-Hülse 34 relativ zum ersten Stangenteil 24 in Richtung der Achse 7 verstellt werden kann. Durch eine Kontermutter 37 wird eine solche Relativlage der Schalt-Hülse 34 zum Rohrabschnitt 30 gesichert. In Fig. 1 ist dargestellt, wie das erste Stangenteil 24 direkt über den scheibenförmigen Mitnehmer 33 gegen das zweite Stangenteil 25 anliegt.

Am Gestell 1 sind drei Schalter angebracht. Ein erster Schalter 38 ist dem zweiten Stangenteil 25 zugeordnet. Hierzu ist am zweiten Stangenteil 25 am Übergang zu dessen Rohrabschnitt 30 ein Schaltelement 39 angebracht, das beim Vorbeigang am ersten Schalter 38 diesen betätigt. Ein zweiter Schalter 40 ist der Schalt-Hülse 34 zugeordnet und wird beim Vorbeigang der Schalt-Hülse 34 an diesem Schalter 40 durch ein an der Schalt-Hülse 34 ausgebildetes bundartiges Schaltelement 41 betätigt. Ein dritter Schalter 42 ist dem Kurbeltrieb 18 zugeordnet und wird von einem an der Kulisse 20 angebrachten Schaltelement 43 betätigt.

Die drei Schalter 38, 40, 42 sind über Schaltleitungen 44, 45, 46 auf eine zentrale Steuereinheit 47 geschaltet, von der Steuerleitungen 48, 49, 50 zu dem Einlaß-Ventil-Antrieb 10, dem Auslaß-Ventil-Antrieb 13 und dem Elektro-Motor 14 führen.

Nachfolgend wird die Funktion des Dosier-Gerätes beschrieben, wobei von der in der Zeichnung dargestellten Stellung der verschiedenen Teile des Gerätes ausgegangen wird:
Das Gerät befindet sich am Ende eines Auspreßvorganges, bei dem sich der Kurbeltrieb 18 in seinem unteren Totpunkt befindet; der Auspreß-Kolben 6 hat das im Dosier-Zylinder 5 befindliche Material ausgepreßt. Das Einlaß-Ventil 9 ist noch geschlossen und das Auslaß-Ventil 12 ist noch geöffnet. Das erste Stangenteil 24 liegt fest gegen das zweite Stangenteil 25 an.

Durch den ersten Schalter 38 wird zuerst das Auslaß-Ventil 12 geschlossen und dann das Einlaß-Ventil 9 geöffnet. Der sich noch drehende Kurbeltrieb 18 dreht weiter nach oben und nimmt das erste Stangenteil 24 mit. Aufgrund des Spiels von erstem Stangenteil 24 und zweitem Stangenteil 25 im Bereich von Mitnehmer 33 und Hinterschneidung 32 wird zuerst das zweite Stangenteil 25 noch nicht mitgenommen. Im weiteren Verlauf der Drehung des Kurbeltriebs 18 nach oben wird dann auch das zweite Stangenteil 25 über den Mitnehmer 33 mitgenommen. Sobald das Einlaß-Ventil 9 geöffnet ist, wird das Material durch den am Einlaß 8 anstehenden Druck in den Dosier-Zylinder 5 gedrückt, da es durch den Auslaß 11 nicht abfließen kann. Der Auspreß-Kolben 6 wird frei im Dosier-Zylinder 5 verschoben, da die Kolbenstange 19, und zwar auch deren zweites Stangenteil 25 vom Kurbeltrieb 18 bereits mit nach oben genommen ist.

Wenn der Kurbeltrieb 18 im oberen Totpunkt ist, wird der Motor 14 durch den dritten Schalter 42 aufgrund einer Betätigung dieses dritten Schalters 42 durch das Schaltelement 43 abgeschaltet, also stillgesetzt.

Das Füllen des Dosier-Zylinders 5 erfolgt noch fortlaufend, bis das Schaltelement 41 der Schalt-Hülse 34 den zweiten Schalter 40 betätigt. Am Ende dieses Füllvorganges kommt auch der Rand 36 der Schalt-Hülse 34 zur Anlage gegen den Anschlag 27. Der Schalter 40 wird also zeitgleich mit dem mechanischen Anhalten der Schalt-Hülse 34 betätigt. Der Schalter 40 ist entsprechend am Gestell 1 angebracht. In Folgeschaltung wird nunmehr das Einlaß-Ventil 9 geschlossen, das Auslaß-Ventil 12 geöffnet und der Motor 14 gestartet. Aufgrund des Spiels zwischen dem ersten Stangenteil 24 und dem zweiten Stangenteil 25 beginnt das Auspressen des Materials aus dem Dosier-Zylinder 5 nach dem Starten des Motors 14 mit einer geringen zeitlichen Verzögerung, nämlich erst dann, wenn das erste Stangenteil 24 und das zweite Stangenteil 25 wieder - wie in der Zeichnung dargestellt - dicht aneinanderliegen. Am Ende des Auspreßvorgangs wird der erste Schalter 38 vom Schaltelement 39 betätigt, wodurch das Auslaß-Ventil 12 geschlossen und das Einlaß-Ventil 9 mit einer geringen zeitlichen Verzögerung geöffnet wird. Der Motor 14 dreht weiter, d.h. er hält im unteren Totpunkt nicht an, und es beginnt ein Füllvorgang, wie vorstehend bereits beschrieben.

Durch eine Verstellung der Schalt-Hülse 34 gegenüber dem Rohrabschnitt 30 kann eine Feineinstellung des Füllvolumens des Dosier-Zylinders 5 bewirkt werden. Wenn erhebliche Veränderungen des Füllvolumens, also erhebliche Veränderungen des Füll-Hubes des Auspreß-Kolbens 6 erreicht werden sollen, dann muß die Kurbel 17 ausgewechselt werden. In diesem Falle ist es zweckmäßig, auch die Kulisse 20 auszuwechseln, wobei die Ausnehmung 21 dann wiederum so angeordnet sein sollte, daß auch bei einem geänderten Hub des Kurbeltriebs 18 der Auspreß-Kolben 6 in seiner unteren in der Zeichnung dargestellten Lage eine identische Lage einnimmt, d.h. die Lage des Auspreß-Kolbens 6 am unteren Totpunkt bleibt identisch. Der durch die doppelte Exzentrizität a definierte Hub sollte also relativ zum Dosier-Zylinder 5 nur nach oben verändert werden.

## Patentansprüche

1. Dosier-Gerät für viskose Materialien mit folgenden Merkmalen:
- ein Gestell (1),
- ein am Gestell (1) angebrachter Dosier-Zylinder (5) mit einem Einlaß (8) und einem Auslaß (11),
- ein im Dosier-Zylinder (5) längs dessen Mittel-Längs-Achse (7) verschiebbar angeordneter Auspreß-Kolben (6),
- ein Einlaß-Ventil (9) zum Verschließen und Öffnen des Einlasses (8),
- ein Auslaß-Ventil (12) zum Verschließen und Öffnen des Auslasses (11),
- ein Dosier-Antrieb (4)
- - mit einer in Richtung der Mittels-Längs-Achse (7) verschiebbaren, mit dem Auspreß-Kolben (6) in Auspreßverbindung bringbaren Betätigungsstange (19) und
- - mit einem mit der Betätigungsstange (19) über einen Kurbeltrieb (18) gekoppelten Elektro-Motor (14).

2. Dosier-Gerät nach Anspruch 1, wobei dem Dosier-Antrieb (4) ein das Auslaß-Ventil (12) schließender und das Einlaß-Ventil (9) öffnender erster Schalter (38) zugeordnet ist.

3. Dosier-Gerät nach Anspruch 1 oder 2, wobei dem Dosier-Antrieb (4) ein das Einlaß-Ventil (9) schließender und das Auslaß-Ventil (12) öffnender zweiter Schalter (40) zugeordnet ist.

4. Dosier-Gerät nach einem der Ansprüche 1 bis 3, wobei dem Dosier-Antrieb (4) ein den Elektro-Motor (14) abschaltender dritter Schalter (42) zugeordnet ist.

5. Dosier-Gerät nach einem der Ansprüche 1 bis 4, wobei die Betätigungsstange (19) aus einem mit dem Kurbeltrieb (18) gekoppelten ersten Stangenteil (24) und einem mit dem Auspreß-Kolben (6) in Eingriff bringbaren zweiten Stangenteil (25) besteht, wobei die beiden Stangenteile (24, 25) in Richtung der Mittel-Längs-Achse (7) mit Spiel miteinander verbunden sind.

6. Dosier-Gerät nach Anspruch 5, wobei der erste Schalter (38) und der zweite Schalter (40) dem zweiten Stangenteil (25) zugeordnet sind.

7. Dosier-Gerät nach Anspruch 6, wobei mit dem zweiten Stangenteil (25) eine in Richtung der Mittel-Längs-Achse (7) verstellbare Schalt-Hülse (34) verbunden ist, der der zweite Schalter (40) zugeordnet ist.

8. Dosier-Gerät nach einem der Ansprüche 1 bis 7, wobei der dritte Schalter (42) dem den Kurbeltrieb (18) und das erste Stangenteil (24) umfassenden Bereich des Dosier-Antriebs (4) zugeordnet ist.

9. Dosier-Gerät nach einem der Ansprüche 1 bis 8, wobei der Kurbeltrieb (18) eine auswechselbare Kurbel (17) aufweist.

10. Dosier-Gerät nach einem der Ansprüche 1 bis 9, wobei der Kurbeltrieb (18) eine auswechselbare Kulisse (20) aufweist.
